**Europäisches Patentamt**

**European Patent Office**

**Office européen des brevets**

(19)

(11) Veröffentlichungsnummer: **0 202 619
B1**

(12) # EUROPÄISCHE PATENTSCHRIFT

(45) Veröffentlichungstag der Patentschrift:
**06.12.89**

(21) Anmeldenummer: **86106665.2**

(22) Anmeldetag: **15.05.86**

(51) Int. Cl.⁴: **H01G 1/02**

(54) Elektrischer Kondensator, der schüttel- und verdrehsicher in ein Gehäuse eingebaut ist.

(30) Priorität: **20.05.85 DE 3518068**

(43) Veröffentlichungstag der Anmeldung:
**26.11.86 Patentblatt 86/48**

(45) Bekanntmachung des Hinweises auf die Patenterteilung:
**06.12.89 Patentblatt 89/49**

(84) Benannte Vertragsstaaten:
**DE FR GB IT**

(56) Entgegenhaltungen:
**CH-A- 473 462
DE-A- 2 342 356
DE-A- 3 047 815
FR-A- 1 473 238**

(73) Patentinhaber: **Siemens Aktiengesellschaft,
Wittelsbacherplatz 2, D-8000 München 2(DE)**

(72) Erfinder: **Hübscher, Wilhelm, Dipl.-Ing. FH,
Rüblingerstrasse 41,
D-7929 Gerstetten/Heidenfingen(DE)**
Erfinder: **Erhardt, Werner, Dipl.-Ing. FH, Triebweg 4,
D-7901 Ballendorf(DE)**

## Beschreibung

Die Erfindung betrifft einen elektrischen, insbesondere stirnkontaktierten Wickelkondensator, der schüttel- und verdrehsicher in ein Gehäuse eingebaut ist, und bei dem der Kondensator durch zumindest ein als Halteplatte oder Isolierkappe ausgebildetes Befestigungsteil mittels einer in der Gehäusewandung angebrachten Sicke festgelegt ist.

Elektrische Kondensatoren, insbesondere Leistungskondensatoren, werden in Metallbechergehäuse dicht eingebaut, um einerseits beispielsweise den Austritt einer Imprägnierflüssigkeit zu verhindern und um andererseits den Kondensator vor Umwelteinflüssen zu schützen. Beim Einbau des Kondensators muß darauf geachtet werden, daß Relativbewegungen zwischen dem Kondensatorgehäuse und dem Kondensator selbst verhindert werden. Derartige Relativbewegungen, insbesondere Verdrehungen, hätten zur Folge, daß entweder im Kondensator angeordnete Zuleitungsdrähte abgeschert werden können, oder daß Kurzschlüsse auftreten.

Bisher wird dieses Problem dadurch gelöst, daß über den Kondensatorwickel ein Befestigungsteil geschoben wird, und daß dieses Befestigungsteil durch eine im Gehäuse angeordnete Sicke unter Druckanwendung den Kondensatorwickel festlegt. Derartige Befestigungsteile können zum Beispiel als Halteplatte oder Isolierkappe (DE-OS 30 47 815) ausgebildet sein. Diese Befestigungsteile besitzen beispielsweise auf der Innenseite Rippen, die einen guten Kraftschluß zu der rauhen Stirnkontaktfläche des Wickels gewährleisten. Eine schüttelsichere Halterung wird durch die bekannten Befestigungsteile erreicht, das heißt Relativbewegungen in axialer Richtung des Kondensatorwickels werden vermieden. Andererseits besitzen die im allgemeinen aus einem Isoliermaterial gefertigten Befestigungsteile eine relativ glatte Oberfläche, so daß der erforderliche Kraftschluß zwischen Gehäusesicke und Befestigungsteil nur durch einen hohen Auflagedruck der Gehäusesicke erreicht werden kann. Dies führt unter Umständen zu einer Deformierung der Wickeloberfläche (Schoop-Schicht). Bei Zurücknahme des Auflagedruckes besteht die Gefahr, daß der nötige Kraftschluß zwischen Befestigungsteil und Sicke nicht erreicht wird, wodurch das Befestigungsteil und damit der Kondensatorwickel eine Drehbewegung mit den beschriebenen nachteiligen Folgen vollführen kann.

Aufgabe der Erfindung ist es, einen elektrischen Kondensator anzugeben, der verdrehsicher in ein Gehäuse eingebaut ist.

Diese Aufgabe wird erfindungsgemäß dadurch gelöst, daß das Befestigungsteil auf der Außenseite mehrere Aussparungen im Kantenbereich aufweist, die Sicke im Bereich der Aussparungen entsprechend deren Form am Befestigungsteil anliegt und das Befestigungsteil auf seiner Innenseite Rippen besitzt, die den Kondensatorwickel axial festlegen.

Hierdurch wird der Vorteil erzielt, daß beim Festsicken während des Einbaus die Gehäusesicke der Form entsprechend an das Befestigungsteil angelegt wird. Dadurch entsteht automatisch ein Formschluß, der ein Verdrehen verhindert. Ferner ist es vorteilhaft, beim Zusammenbau eine wesentlich geringere Kraft auszuüben, ohne daß die sichere Fixierung des Wickels darunter leidet.

Eine vorteilhafte Ausgestaltung sieht vor, daß das Befestigungsteil zusätzliche Aussparungen im Außenrandbereich besitzt.

Die Erfindung wird anhand der folgenden Ausführungsbeispiele näher erläutert.

In der dazugehörenden Zeichnung zeigen

Fig. 1 einen in ein Gehäuse eingebauten Wickelkondensator,

Fig. 2 eine Ausführungsform einer Halteplatte mit Aussparung,

Fig. 3 einen vergrößerten Ausschnitt aus Fig. 1 und

Fig. 4 eine weitere Ausführungsform einer Halteplatte.

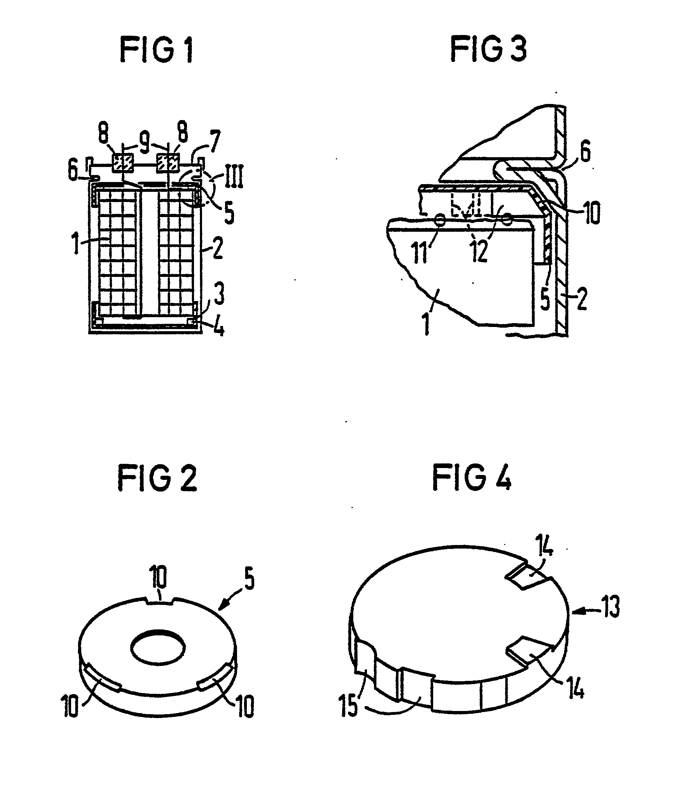

In der Fig. 1 ist dargestellt, wie ein Kondensatorwickel 1 in ein Metallgehäuse 2 eingebaut ist. Am Boden 3 des Gehäuses 1 befindet sich ein isolierendes Halteteil 4, das als Auflage für den Kondensatorwickel 1 dient. Auf der oberen Seite des Kondensatorwickels 1 ist ein isolierendes Halteteil 5 angeordnet, das durch eine Sicke 6 im Gehäusemantel festgedrückt wird und damit den Wickel 1 im Gehäuse 2 fixiert. Das Gehäuse 2 wird durch einen Deckel 7 abgeschlossen, der dicht mit dem Gehäuse 2 verbunden ist, zum Beispiel durch Falzen, Kleben, Löten oder Schweißen. Im Deckel 7 befinden sich isolierende Durchführungen 8 für die elektrischen Zuleitungen 9.

In der Figur 2 ist das isolierende Halteteil 5 dargestellt, das als Halteplatte ausgebildet ist und vorzugsweise aus einem Isoliermaterial besteht. Die Halteplatte 5 weist im Kantenbereich 3 Aussparungen 10 auf.

In der Fig. 3 ist ein vergrößerter Ausschnitt der Fig. 1 dargestellt. Die Halteplatte 5 ist über dem Kondensatorwickel 1 angeordnet und es ist zu erkennen, daß im Bereich der Aussparung 10 die Gehäusesicke 6 entsprechend der Form an der Halteplatte 5 anliegt. Hierdurch entsteht der Formschluß, der ein Verdrehen der Halteplatte 5 und damit zusammenhängend des Kondensatorwickels 1 verhindert. Auf der Innenseite der Halteplatte 5 sind Rippen angeordnet, die in innigem Kontakt mit der Schoop-Schicht 11 auf der Stirnseite des Kondensatorwickels 1 stehen und wegen der "rauhen" Oberfläche der Stirnkontaktschicht 11 den Wickel 1 hinreichend sicher fixieren. Die Halteplatte 5 ist seitlich etwas heruntergezogen, so daß einerseits eine sichere Isolierung zum Metallgehäuse 2 und andererseits eine Fixierung des Kondensatorwickels 1 in radialer Richtung gewährleistet ist. Durch das Zusammenwirken der geschilderten Maßnahmen ist sichergestellt, daß der Kondensatorwickel 1 keine Relativbewegungen gegenüber dem Gehäuse 2 ausführen kann. Elektrische Kurzschlüsse werden auf diese Art in sicherer Weise verhindert.

In der Fig. 4 ist eine weitere Ausführungsform einer Halteplatte 14 dargestellt, die neben Aussparungen 14 im Kantenbereich zusätzliche Aussparungen 15 im Außenrandbereich besitzt. Da durch die Aussparungen 15 im Außenrandbereich der Druck beim Sicken in radialer Richtung ausgeübt wird, können hierdurch Kondensatorwickel besonders schonend mit niedrigen Auflagedrücken im Gehäuse eingebaut werden.

**Patentansprüche**

1. Elektrischer, insbesondere stirnkontaktierter Wickelkondensator, der schüttel- und verdrehsicher in ein Gehäuse eingebaut ist, und bei dem der Kondensator durch zumindest ein als Halteplatte oder Isolierkappe ausgebildetes Befestigungsteil mittels einer in der Gehäusewandung angebrachten Sicke festgelegt ist, **dadurch gekennzeichnet,** daß das Befestigungsteil (5) auf der Außenseite mehrere Aussparungen (10) im Kantenbereich aufweist, die Sicke (6) im Bereich der Aussparungen (10) entsprechend deren Form am Befestigungsteil (5) anliegt und das Befestigungsteil (5, 13) auf seiner Innenseite Rippen (12) besitzt, die den Kondensatorwickel (1) axial festlegen.

2. Elektrischer Kondensator nach Anspruch 1, **dadurch gekennzeichnet,** daß das Befestigungsteil (13) zusätzliche Aussparungen (15) im Außenrandbereich besitzt.

**Claims**

1. Electrical, in particular butt-contacted, wound capacitor which is fitted free from vibration and roation in a housing, and in which the capacitor is fixed by at least one fixing part, constructed as a supporting plate or insulating cap, by means of bead fitted in the housing wall, characterized in that the fixing part (5) has on the outside several cut-outs (10) in the edge region, the bead (6) bears against the fixing part (5) in the region of the cut-outs (10) accordance with their shape, and the fixing part (5, 13) has, on its inner side, ribs (12) which axially fix the capacitor element (1).

2. Electrical capacitor according to Claim 1, characterized in that the fixing part (13) has additional cut-outs (15) in the outer edge region.

**Revendications**

1. Condensateur électrique bobiné, notamment à contacts frontaux, qui est monté dans un boîtier de manière qu'il ne puisse ni être secoué, ni tourner, ce condensateur étant fixé par au moins un élément de fixation réalisé sous la forme d'une plaque de maintien ou d'un capot isolant, au moyen d'une moulure ménagée dans la paroi du boîtier, caractérisé par le fait que la partie de fixation (5) comporte, au niveau de son arête, plusieurs évidements (10) sur la face extérieure, qu'au niveau des évidements (10), la moulure (6) s'applique contre l'élément de fixation (5), conformément à la forme des évidements, et que l'élément de fixation (5, 13) comporte, sur sa face intérieure, des nervures (12), qui fixent axialement la bobine (1) du condensateur.

2. Condensateur électrique suivant la revendication 1, caractérisé par le fait que l'élément de fixation (13) comporte des évidements supplémentaires (15), au niveau de son bord extérieur.

# FIG 1

# FIG 3

# FIG 2

# FIG 4